(19) Europäisches Patentamt
European Patent Office
Office européen des brevets

(11) **EP 2 106 170 A1**

(12) **EUROPEAN PATENT APPLICATION**

(43) Date of publication:
**30.09.2009 Bulletin 2009/40**

(51) Int Cl.:
***H04W 16/00*** (2009.01)

(21) Application number: **08290276.8**

(22) Date of filing: **25.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Alcatel Lucent**
**75008 Paris (FR)**

(72) Inventor: **Chen, Yejian**
**70191 Stuttgart (DE)**

(74) Representative: **Richardt, Markus Albert**
**Richardt Patents & Trademarks**
**Leergasse 11**
**65343 Eltville am Rhein (DE)**

Remarks:
Amended claims in accordance with Rule 137(2) EPC.

(54) **Fixed null-steering beamforming method**

(57)   The invention relates to a frequency reuse method in a base station of a Frequency Division Multiplexing Access wireless communication system, the wireless communication system comprising at least the base station adapted for covering a cell, at least one wireless terminal coupled to the base station, the method comprising the steps of: calculating a maximum number of beams per cell by obtaining a number of antennas of the base station; initiating a fixed null-steering beamforming by setting a number of orthogonal fixed beams to a first constant on a portion of the cell, if a traffic of the base station is bigger than a first threshold; obtaining an absolute or an approximate location of the wireless terminal within the cell; scheduling the wireless terminal to fixed null-steering resources, if the absolute or approximate location of the wireless terminal is within the beam zone of the cell; setting the number of orthogonal fixed beams to a second constant of the fixed null-steering beamforming, if the traffic is bigger than a second threshold.

Fig. 1

EP 2 106 170 A1

## EP 2 106 170 A1

## Description

### Technical field

The invention relates to a method of fixed null-steering beamforming in a base station and to a computer program product.

### Background and related art

In wireless communication systems, the frequencies resources allocated to the service may be re-used in a regular pattern of areas, called cells, each covered by one base station. In mobile wireless communication systems these cells are usually hexagonal. To ensure that the mutual interference between wireless terminals remains low, adjacent cells use different frequencies. In fact, a set of N different frequencies are used for each cluster of N adjacent cells. Cluster patterns and the corresponding frequencies are re-used in a regular pattern over the entire service area.

The closest distance between the centres of two cells using the same frequency in different clusters is determined by the cluster size N and the layout of the cell cluster. This distance is called the frequency re-use distance.

The signal processing technique of beamforming may be used with arrays of transmitting or receiving transducers that control the directionality of a radiation pattern. When receiving a signal, beamforming can increase the receiver sensitivity in the direction of wanted signals and decrease the sensitivity in the direction of interference and noise. When transmitting a signal, beamforming can increase the power in the direction the signal is to be sent. The change compared with an omnidirectional transmission is known as the transmission gain. These changes are done by creating beams and nulls in the radiation pattern.

Therefore, there is a need of a new frequency reuse method in a base station, of a base station and of a computer program product.

### Summary

The invention provides to a frequency reuse method in a base station of a Frequency Division Multiplexing Access wireless communication system, the wireless communication system comprising at least the base station adapted for covering a cell, at least one wireless terminal coupled to the base station, the wireless communication system dividing a frequency band into three frequency sub-bands, wherein one of the frequency sub-band is assigned to the base station, the method comprising the steps of:

- calculating a maximum number of beams per cell by obtaining a number of antennas of the base station;
- initiating a fixed null-steering beamforming by setting a number of orthogonal fixed beams to a first constant on a portion of the cell, if a traffic of the base station is bigger than a first threshold;
- obtaining an absolute or an approximate location of the wireless terminal within the cell;
- scheduling the wireless terminal to fixed null-steering resources, if the absolute or approximate location of the wireless terminal is within the beam zone of the cell;
- setting the number of orthogonal fixed beams to a second constant of the fixed null-steering beamforming, if the traffic is bigger than a second threshold,

wherein the first constant is smaller than the second constant and the second constant is smaller or equal to the maximum number of beams.

The Frequency Division Multiplexing Access wireless communication system can be a GSM system, or an OFDMA system such as WiMAX or LTE. If the fixed null-steering beamforming is initiated, the wireless terminals can be scheduled either to fixed null-steering resources or to reuse-3 resources. If the reuse-3 system is activated, then the wireless terminals can be scheduled only to reuse-3 resources. In the reuse-3 system, the sub-band assigned to the cell is shared by all users. In the fixed null-steering beamforming, a portion of the sub-band may be assigned exclusively to the wireless terminals located within the beam part of the cell, and the other portion of the sub-band is assigned for the reuse-3 resources.

One of the advantages of the embodiments is that the throughput of the system improves the classic reuse-3 system, without using the typically complicated interference suppression or cancellation algorithm of the reuse 1. Inside the cell, the wireless terminals are scheduled to occupy the resources according to the location information. The wireless terminals within the fixed null-steering beam zones may share the same spectral temporal resources between all the wireless terminals. The complicated interference suppression on cancellation algorithm is avoided by using the predefined fixed null-steering beamforming weights. The new method and the new base station become an alternative that nearly obtains the throughput of the reuse 1 system with the advantages of a low co-channel interference of reuse 3 systems.

In one of the embodiments, the wireless terminal comprises a positioning system (GPS, Galileo), the wireless terminal obtains the absolute location, and otherwise the base station obtains the approximate location by calculating a Direction of Arrival of an uplink signal from the wireless terminal and an uplink feedback CINR. The advantage is that if the wireless terminal is not able to obtain its location, the base station can calculate an approximated location.

In an embodiment, the first threshold describes an upper bound of a traffic of a re-use-3 system of the wireless communication system, wherein the second threshold describes an upper bound of a traffic of a fixed null-steering beamforming with a first constant number of beams. The second threshold determines the switch between the fixed null-steering beamforming with a first constant of fixed beams to a second constant.

In an embodiment, the method further comprises the steps of: switching to said re-use-3 system and scheduling the wireless terminal to reuse-3 resources, if the absolute or approximate location of the wireless terminal is outside the beam zone. The advantage of the embodiments is that the switching between the fixed null-steering beamforming and the reuse-3 system can be done according to the conditions of the traffic of the base station, and if the fixed null-steering beamforming is used, the scheduling is done according the location of the wireless terminals..

In a further embodiment, the method further comprises the steps of: switching to the reuse-3 resources for all wireless terminals located within the cell, if the traffic is smaller than the first threshold. The switching between the fixed null-steering beamforming and the reuse-3

In another aspect, the invention relates to a base station in an FDMA digital cellular mobile communication system being operable to perform in accordance with any one of the preceding claims.

In another aspect, the invention relates to a computer program product stored on a computer usable medium, comprising computer readable program means for causing a computer to perform a method according to any of the preceding claims 1 to 5 when the program is run on the computer.

**Brief description of the drawings**

In the following preferred embodiments of the invention will be described in greater detail by way of example only making reference to the drawings in which:

Figure 1      shows an embodiment of a method of fixed null-steering beamforming,

Figure 2      shows a second embodiment of fixed null-steering beamforming,

Figure 3      shows an example of a fixed M-null-steering beam pattern under three cells,

Figure 4      shows an embodiment of a base station and wireless terminal,

Figure 5      shows an embodiment of resource assignment in a cell of fixed null- steering beamforming.

**Detailed description**

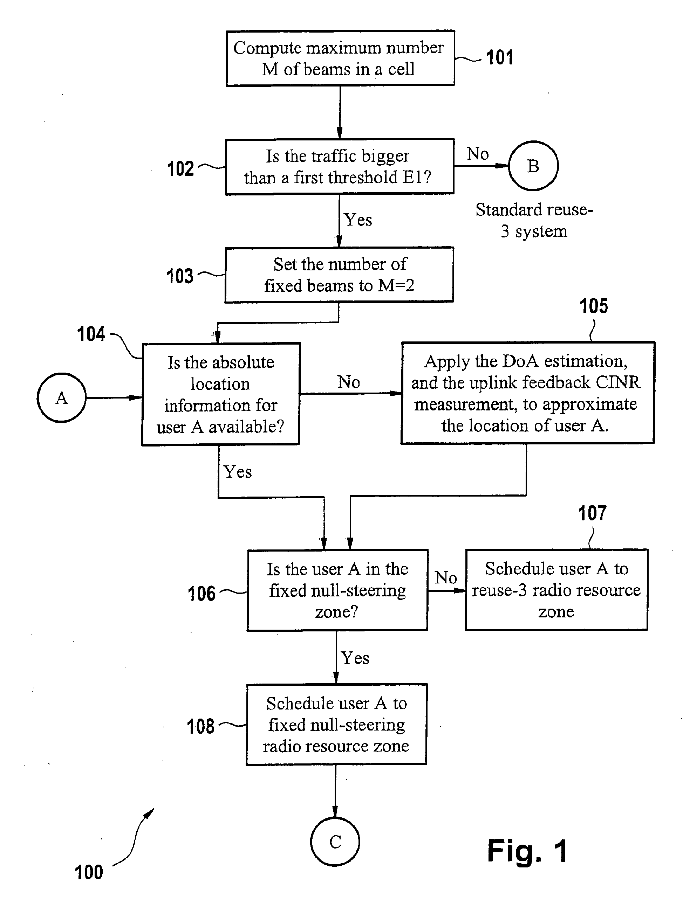

Fig. 1 shows a method 100 of fixed null-steering beamforming in a base station, comprising a first step 101 where the maximum number $M_{max}$ of beams in a cell is calculated. This calculation depends mainly on the number of antennas that the base station uses to transmit to the wireless terminals within the cell and to the sector angular coverage within the cell. The maximum number $M_{max}$ of beams denotes an upper bound of the possible beams that may be allocated within a cell. On a second step 102, the traffic of the base station is measured and compared with a first threshold E1. The traffic represents all the communications between the base station and all the wireless terminals within the cell covered by the base station. If the traffic is smaller than the first threshold E1, the standard reuse-3 system is used and no fixed orthogonal beams will be formed within the cell. Otherwise, if the traffic is bigger than the first threshold, in a third step 103 a first two beams are set within the cell, so that a fixed null-steering zone covered by both beams is formed within the cell.

After this third step 103, the location of the wireless terminal A is obtained. The fourth step 104 obtains the absolute location information for that wireless terminal A if the wireless terminal is equipped with a Global Positioning System as a GPS or Galileo. If that is not the case and the wireless terminal does not include any means to obtain the absolute location information, a fifth step 105 within the base station calculates an approximate location of the wireless terminal A within the cell. This location is obtained by calculating the direction of arrival information from the uplink received signals from the wireless terminal and with the uplink feedback CINR measurements. After any of these two ways of obtaining the location is completed, either by obtaining the absolute location information on the forth step 104 or by obtaining the approximate location of the fifth step 105, the result is used on the sixth step 106, where it is defined if the location of the wireless terminal A is within the fixed null-steering zone.

If the wireless terminal A is outside the fixed null-steering zone, the wireless terminal is scheduled to use the standard reuse-3 radio resource system within the reuse 3 radio resource zone. If the wireless terminal is within the zone, then the terminal is scheduled to use the corresponding resources of the fixed null-steering radio. The steps from 104-108 are repeated for all the wireless terminals located within the cell covered by the base station.

The maximum number of $M_{max}$ orthogonal spatial beams may be calculated as:

$$M \leq M_{max} = \left\lfloor \frac{\Omega(N-1)}{\frac{\pi}{2}} \right\rfloor \qquad (1)$$

where $\Omega$ denotes the sector angular coverage, $N$ denotes the number of antenna at base station. As an example if $\Omega = \frac{2}{3}\pi$, and base station equips 4 antennas, thus, the $M \leq M_{max} = \left\lfloor \frac{\frac{2\pi}{3}(4-1)}{\frac{\pi}{2}} \right\rfloor = 4$. Consequently, the number of beams: $M = 4$ and $M = 2$ may be taken into consideration in the configuration of the fixed null-steering resources. The spatial separation of the beams $\theta$ has to satisfy the relation,

$$\theta \geq \frac{\Omega}{M_{max}} . \qquad (2)$$

In the example the result is $\theta \geq \frac{\pi}{6}$.

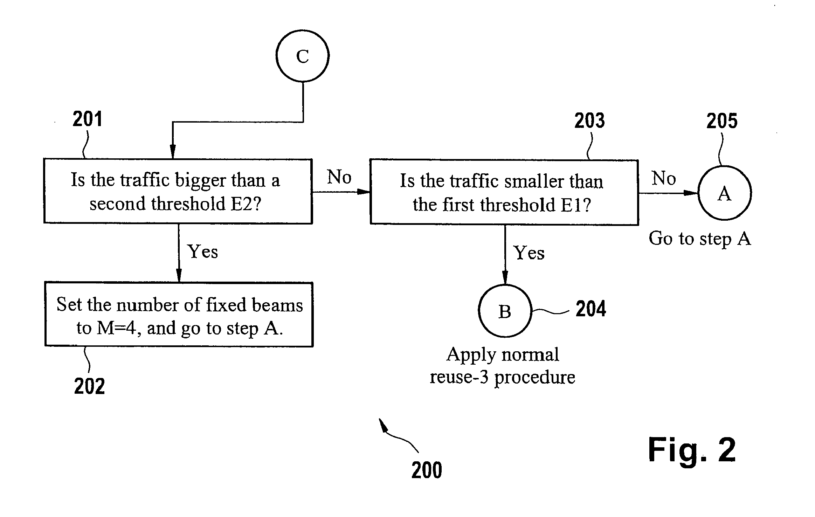

Fig. 2 shows an embodiment of the fixed null-steering beamforming method 200 that may be applied after the eighth step 108 described in fig. 1. In a first step 201, the traffic of the base station is compared to a second threshold E2, which is typically bigger than the first threshold E1. If the traffic within the cell that communicates with the base station is bigger than the threshold E2, the number of fixed beams is increased in a second step 202 and set to, e.g. M=4. The M=4 indicates using four beams within the area covered by the base station. Otherwise, if the traffic is smaller than the second threshold, on a third step 203 the current traffic is compared to the first threshold E1. If the amount of traffic is smaller than the first threshold E1, in a forth step 204 the normal reuse 3 system is applied for the whole cell and for all the wireless terminals that communicate with the base station. Otherwise, if the traffic is bigger than the first threshold, on a fifth step 205 the steps 104-108 described on fig. 1 are repeated, where the location information for the wireless terminals within the cell is obtained and the scheduling is decided as whether using the fixed null-steering resources or the standard reuse 3 radio resources.

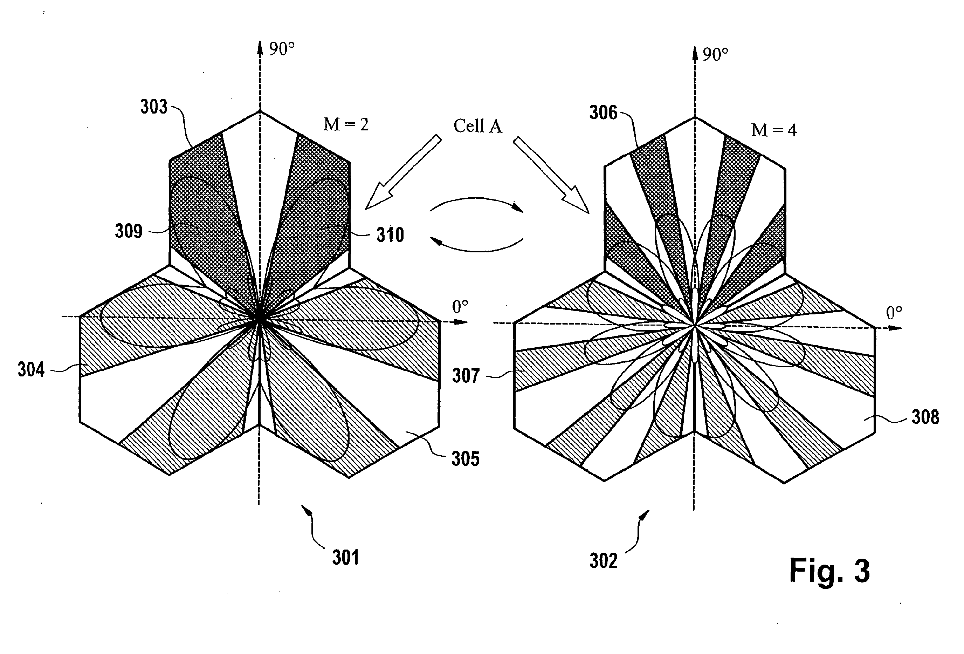

Fig. 3 shows two groups of cells 301 and 302 using the fixed null-steering beamforming method. The first group of cells 301 further comprises the first cell 303 and a second 304 and third cell 305, each including two beams per cell. The second group of cells 302 further comprises a first cell 306 and the second 307 and third 308. Each one of the second group of cells includes four beams corresponding to the fixed null-steering method with M=4. The first group of cells 301 with the two beams per cell corresponds to the configuration obtained when the traffic of the cell is bigger than a first threshold. All wireless terminals within the beams zones 309 and 310 are scheduled to use the resources of the fixed null-steering. The beam zone corresponds to an angle aperture of the cell, as represented by the zones 309 and 310.

The second group of cells 302 corresponds to the configuration obtained when the traffic of the cell is bigger than a second threshold E2. This can occur after a switch from an initial configuration of two beams, as represented in the group of cells 301. The switch of the configurations between the two beams or the four beams occurs adaptively during the operation and maintenance of the network and during the scheduling of all the wireless terminals within the cells covered by the base stations. In general, the coverage of the cell area is bigger for the two beams than the four beams, and the effective reuse factor is then smaller for the two beams than the four beams.

In wireless communication systems with frequency division multiple access, a frequency planning is necessary in order to use the complete spectrum of available frequency resources and avoid a high co-channel interference level. In a frequency reuse layout of three sub-bands, each sub-band is allocated in an adjacent cell, the three adjacent cell forming a so-called cluster. The reuse factor is denoted by one third (1/3). In general, by using a larger cluster size, the co-channel interference is smaller, as the cells using the same frequency band are farther away to each other, but the frequency sub-band is smaller for each individual cell, limiting the traffic into the cell. By displaying a small cluster size of three, the maximal system capacity may be approached, obtaining a balance between the co-channel interference and the cell throughput.

The use of fixed null-steering beamforming schemes enables the complete frequency reuse of the corresponding sub-band in a number M of spatial and geographical regions. For these types of schemes, the reuse factor may become M/3, because the frequency band allocated to the wireless terminals are M times reused. After obtaining the absolute or relative location information of the wireless terminals, the base station is able to decide if the wireless terminal or the wireless terminal is scheduled and allocated using the resources of the fixed null-steering zone or of the normal reuse-3 zone.

The null-steering beamforming is an art of adaptive beamforming for the suppression of interference and is associated with the concept of spatial domain multiple access (SDMA). For the fixed null-steering beamforming, the beamforming weights are not necessary calculated, because the beam patterns are fixed in a database within the base station and the specific number of beams is determined by the traffic of the cell.

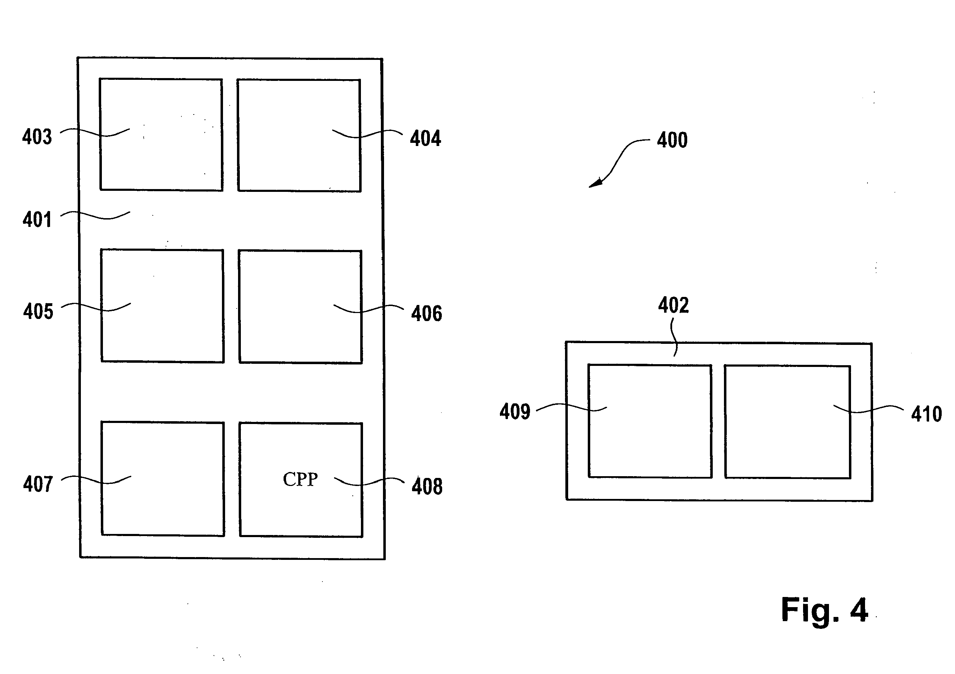

Fig. 4 shows a wireless communication system 400 comprising a base station 401 and wireless terminal 402. The base station 401 comprises:

- means for 403 calculating a maximum number $M_{max}$ of beams per cell by obtaining a number of antennas of the base station;
- means for 404 initiating a fixed null-steering beamforming by setting a number of fixed beams to M=2 on a beam zone of the cell, if a traffic of the base station is bigger than a first threshold;
- means for 405 obtaining an absolute or an approximate location of the wireless terminal within the cell;
- means for 406 scheduling the wireless terminal to fixed null-steering resource, if the absolute or approximate location of the wireless terminal is within the beam zone of the cell;
- means for 407 setting the number of fixed beams to M=4 of the fixed null-steering beamforming, if the traffic is bigger than a second threshold.
- a computer program product 408 stored on a computer usable medium, comprising computer readable program means.

The wireless terminal 402 comprises:

- means for 409 obtaining the absolute location of the wireless terminal 402
- means for 410 sending said absolute location of the wireless terminal 402 to the base station 401.

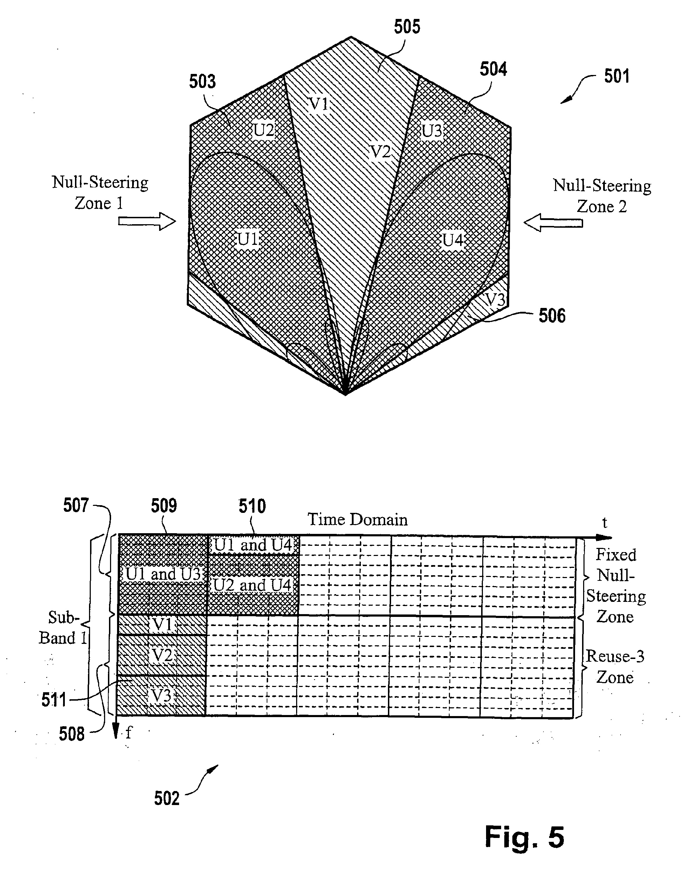

Fig. 5 shows a cell 501 and a frame 502. The cell 501 represents a cell with a fixed null-steering method including a first null-steering zone 503, a second null-steering zone 504, two wireless terminals U1 and U2 within the first null-steering zone 503 and wireless terminals U3 and U4 on the second null-steering zone 504. Further, the cell comprises a first reuse 3 system zone 505 including two wireless terminals V1 and V2 and a second reuse 3 zone 506 including a wireless terminal V3 for wireless terminal.

According to the method of fixed null-steering beamforming, two beams within the cell 501 are created when the traffic of the cell is bigger than a first threshold. Then, the location of all the wireless terminals within the cell, including U1 to U4 and V1 to V3, which according to the wireless terminal characteristics can be absolute location information or approximate location information. Further, it is determined that the wireless terminals U1 and U2 are within the fixed null-steering zone and wireless terminals U3 and U4 are within the second null-steering zone 504. Therefore, these terminals are allocated and scheduled within the fixed null-steering zone 507 of the sub-band 1 of the frame 502. The fixed null-steering zone 507 corresponds to a first sub-zone of the frame 502 and a second sub-zone 508 of the frame 502 is used for the reuse 3 zone, that is for all the wireless terminals outside the fixed null-steering zones.

On a first time domain 509 within the fixed null-steering zone 507, the resource allocation is shared between the wireless terminals U1 and U3 for the whole fixed null-steering zone 507 within a portion of the time frame. On the second sub-frame 510, the wireless terminals U1 and U4 share a partial amount of resources in the frequency domain, and the wireless terminals U2 and U4 share the rest of the frequency resources for the fixed null-steering zone 507. On the reuse-3 zone, the frame 502 shows the resource allocation for the three wireless terminals V1, V2 and V3 located outside the beams, assigned to the second sub-band 508. The sub-zone 508 describes a separated frequency resource allocation for each one of the wireless terminals.

## List of Reference Numerals

| 101 | first step |
|---|---|
| 102 | second step |
| 103 | third step |
| 104 | fourth step |
| 105 | fifth step |
| 106 | sixth step |
| 107 | seventh step |
| 108 | eighth step |
| 200 | second flowchart |
| 201 | first step |
| 202 | second step |
| 203 | third step |
| 301 | first group of cells |
| 302 | second group of cells |
| 303 | first cell |
| 304 | second cell |
| 305 | third cell |
| 306 | first cell |
| 307 | second cell |
| 308 | third cell |
| 309 | first null-steering zone |
| 310 | second null-steering zone |
| 400 | wireless communication system |
| 401 | base station |
| 402 | wireless terminal |
| 403 | means for calculating |
| 404 | means for initiating |
| 405 | means for obtaining |
| 406 | means for scheduling |
| 407 | means for setting |
| 408 | CPP |
| 409 | means for obtaining |
| 410 | means for sending |
| 501 | cell |
| 502 | frame |
| 503 | first null-steering zone |
| 504 | second null-steering zone |

(continued)

| 505 | normal reuse 3 zone |
|-----|---------------------|
| 506 | second reuse 3 zone |
| 507 | fixed null-steering zone |
| 508 | reuse 3 zone |
| 509 | first sub-frame |
| 510 | second sub-frame |
| 511 | third sub-frame |

**Claims**

1. A frequency reuse method in a base station of a Frequency Division Multiplexing Access wireless communication system , said wireless communication system comprising at least said base station adapted for covering a cell, at least one wireless terminal coupled to said base station, said wireless communication system dividing a frequency band into three frequency sub-bands, wherein one of said frequency sub-band is assigned to said base station, said method comprising the steps of:

   - calculating (101) a maximum number of beams per cell by obtaining a number of antennas of said base station;
   - initiating (103) a fixed null-steering beamforming by setting a number of orthogonal fixed beams to a first constant on a beam zone of said cell, if a traffic of said base station is bigger than a first threshold (102);
   - obtaining an absolute (104) or an approximate location (105) of said wireless terminal within said cell;
   - scheduling (107) said wireless terminal to fixed null-steering radio resources, if said absolute or approximate location of said wireless terminal is within said beam zone of said cell (106);
   - setting (202) said number of fixed beams to a second constant of said fixed null-steering beamforming, if said traffic is bigger than a second threshold (201),

   wherein said first constant is smaller than said second constant and said second constant is smaller or equal to said maximum number of beams.

2. The method as in claim 1, wherein if said wireless terminal comprises a positioning system (GPS, Galileo), said wireless terminal obtains said absolute location (104), otherwise said base station obtains said approximate location by calculating (105) a Direction of Arrival of an uplink signal from said wireless terminal and an uplink feedback CINR.

3. The method as in claim 1, wherein said first threshold describes an upper bound of a traffic of a reuse 3-system of said wireless communication system, wherein said second threshold describes an upper bound of a traffic of fixed null-steering beamforming with a first constant of fixed beams.

4. The method as in claim 1, wherein said method further comprises the steps of: scheduling said wireless terminal to a reuse-3 resource (107), if said absolute or approximate location of said wireless terminal is outside said beam zone.

5. The method as in claim 1, wherein said method further comprises the steps of: switching to said reuse-3 resources for all wireless terminals located within said cell, if said traffic is smaller than said first threshold (204).

6. The method as in claims 1, wherein said first constant is an M=2 and said second constant is an M=4.

7. The method as in claim 1, wherein said base station generates a frame (502) for at least said wireless terminal, said frame (502) comprising a first frequency portion (507) of said fixed null-steering resources and a second frequency portion (508) of said reuse-3 resources, if said traffic of said base station is bigger than said first threshold.

8. A base station (401) for an FDMA digital cellular mobile communication system being operable to perform in accordance with any one of said preceding claims.

9. A computer program product (408) stored on a computer usable medium, comprising computer readable program means for causing a computer to perform a method according to any of said preceding claims 1 to 7 when said program is run on said computer.

**Amended claims in accordance with Rule 137(2) EPC.**

**1.** A frequency reuse method in a base station of a Frequency Division Multiplexing Access wireless communication system , said wireless communication system comprising at least said base station adapted for covering a cell, at least one wireless terminal coupled to said base station, said wireless communication system dividing a frequency band into three frequency sub-bands, wherein one of said frequency sub-band is assigned to said base station, said method comprising the steps of:

- calculating (101) a maximum number of beams per cell by obtaining a number of antennas of said base station;
- initiating (103) a fixed null-steering beamforming by setting a number of orthogonal fixed beams in a beam zone of said cell to a first constant, if a traffic of said base station is bigger than a first threshold (102);
- obtaining an absolute (104) or an approximate location (105) of said wireless terminal within said cell;
- scheduling (107) said wireless terminal to fixed null-steering radio resources, if said absolute or approximate location of said wireless terminal is within said beam zone of said cell (106);
- setting (202) said number of fixed beams of said fixed null-steering beamforming to a second constant, if said traffic is bigger than a second threshold (201),

wherein said first constant is smaller than said second constant and said second constant is smaller or equal to said maximum number of beams.

**2.** The method as in claim 1, wherein if said wireless terminal comprises a positioning system (GPS, Galileo), said wireless terminal obtains said absolute location (104), otherwise said base station obtains said approximate location by calculating (105) a Direction of Arrival of an uplink signal from said wireless terminal and an uplink feedback CINR.

**3.** The method as in claim 1, wherein said first threshold describes an upper bound of a traffic of a reuse 3-system of said wireless communication system,
wherein said second threshold describes an upper bound of a traffic of fixed null-steering beamforming with a first constant of fixed beams.

**4.** The method as in claim 1, wherein said method further comprises the steps of:

scheduling said wireless terminal to a reuse-3 resource (107), if said absolute or approximate location of said wireless terminal is outside said beam zone.

**5.** The method as in claim 1, wherein said method further comprises the steps of:

switching to said reuse-3 resources for all wireless terminals located within said cell, if said traffic is smaller than said first threshold (204).

**6.** The method as in claim 1, wherein said first constant is an M=2 and said second constant is an M=4.

**7.** The method as in claim 1, wherein first frequency portion (507) fixed null-steering resources and second frequency portion (508) reuse-3 resources.

**8.** A base station (401) for an FDMA digital cellular mobile communication system being operable to perform in accordance with any one of said preceding claims.

**9.** A computer program product (408) stored on a computer usable medium, comprising computer readable program means for causing a computer to perform a method according to any of said preceding claims 1 to 7 when said program is run on said computer.

```
┌──────────────────────────┐
│ Compute maximum number   │──  101
│ M of beams in a cell     │
└──────────────────────────┘
              │
              ▼
┌──────────────────────────┐   No    ┌───┐
│ Is the traffic bigger    │────────▶│ B │
│ than a first threshold E1?│        └───┘
└──────────────────────────┘    Standard reuse-
 102                                3 system
              │ Yes
              ▼
┌──────────────────────────┐
│ Set the number of        │
│ fixed beams to M=2       │
└──────────────────────────┘
 103
              │
              ▼
┌──────────────────┐  No  ┌────────────────────────┐
│ Is the absolute  │─────▶│ Apply the DoA estimation,│
│ location         │      │ and the uplink feedback CINR│
│ information for  │      │ measurement, to approximate│
│ user A available?│      │ the location of user A. │
└──────────────────┘      └────────────────────────┘
 104                        105
  (A)         │ Yes
              ▼
┌──────────────────┐  No  ┌────────────────────────┐
│ Is the user A in │─────▶│ Schedule user A to     │
│ the fixed null-  │      │ reuse-3 radio resource │
│ steering zone?   │      │ zone                   │
└──────────────────┘      └────────────────────────┘
 106                        107
              │ Yes
              ▼
┌──────────────────┐
│ Schedule user A to│
│ fixed null-steering│
│ radio resource zone│
└──────────────────┘
 108
              │
              ▼
            ( C )
```

100

**Fig. 1**

9

EP 2 106 170 A1

C

**201**                                                    **203**              **205**

| Is the traffic bigger than a second threshold E2? | → No → | Is the traffic smaller than the first threshold E1? | → No → | A |

Go to step A

↓ Yes                                                ↓ Yes

| Set the number of fixed beams to M=4, and go to step A. |                    B ── **204**

**202**                                                    Apply normal
                                                           reuse-3 procedure

**200**

# Fig. 2

Fig. 3

Fig. 4

EP 2 106 170 A1

**Fig. 5**

**European Patent Office**

**EUROPEAN SEARCH REPORT**

Application Number

EP 08 29 0276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/84869 A (LGC WIRELESS INC [US]) 8 November 2001 (2001-11-08) * page 9, lines 10-32 * * page 10, line 37 - page 11, line 6; figures 3A-3C * ----- | 1-9 | INV. H04Q7/36 |
| A | WO 00/51367 A (ERICSSON TELEFON AB L M [SE]) 31 August 2000 (2000-08-31) * page 6, line 11 - page 7, line 11 * ----- | 1-9 | |
| A | EP 1 184 938 A (LUCENT TECHNOLOGIES INC [US]) 6 March 2002 (2002-03-06) * paragraph [0026]; figures 4A-4F * ----- | 1-9 | |
| A | US 6 480 524 B1 (SMITH MARTIN STEVENS [GB] ET AL) 12 November 2002 (2002-11-12) * column 4, line 52 - column 8, line 24 * ----- | 1-9 | |
| A | WO 98/53633 A (AT & T CORP [US]) 26 November 1998 (1998-11-26) * page 8, line 27 - page 13, line 30; figures 6-8 * ----- | 1-9 | TECHNICAL FIELDS SEARCHED (IPC) |
| A | EP 1 337 122 A (NTT DOCOMO INC [JP]) 20 August 2003 (2003-08-20) ----- | | H04Q H04B |

The present search report has been drawn up for all claims

| Place of search | Date of completion of the search | Examiner |
|---|---|---|
| The Hague | 21 August 2008 | Schut, Gerhard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 29 0276

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2008

| Patent document cited in search report | | Publication date | Patent family member(s) | | Publication date |
|---|---|---|---|---|---|
| WO 0184869 | A | 08-11-2001 | AU | 3993301 A | 12-11-2001 |
| | | | US | 6353600 B1 | 05-03-2002 |
| WO 0051367 | A | 31-08-2000 | AU | 3467800 A | 14-09-2000 |
| EP 1184938 | A | 06-03-2002 | JP | 2002118511 A | 19-04-2002 |
| | | | US | 6400335 B1 | 04-06-2002 |
| US 6480524 | B1 | 12-11-2002 | NONE | | |
| WO 9853633 | A | 26-11-1998 | US | 6339708 B1 | 15-01-2002 |
| | | | US | 6002935 A | 14-12-1999 |
| EP 1337122 | A | 20-08-2003 | CN | 1438782 A | 27-08-2003 |
| | | | DE | 60301022 D1 | 25-08-2005 |
| | | | DE | 60301022 T2 | 29-12-2005 |
| | | | JP | 3538184 B2 | 14-06-2004 |
| | | | JP | 2003244060 A | 29-08-2003 |
| | | | US | 2003153361 A1 | 14-08-2003 |

EPO FORM P0459

For more details about this annex : see Official Journal of the European Patent Office, No. 12/82